# FASCICULE DE BREVET EUROPEEN

(11) **EP 3 693 592 B1**
(45) Date de publication et mention de la délivrance du brevet: **14.04.2021**
(21) Numéro de dépôt: 20151146.6
(22) Date de dépôt: 10.01.2020
(51) Int. Cl.: F02K 1/72

(54) **NACELLE D'UN TURBOREACTEUR COMPORTANT UN ENSEMBLE MOBILE ET UNE STRUCTURE FIXE RENFORCEE**
GONDEL EINES TURBOSTRAHLTRIEBWERKS MIT EINER BEWEGLICHEN ANORDNUNG UND EINER VERSTÄRKTEN FESTEN STRUKTUR
NACELLE OF A TURBOJET ENGINE COMPRISING A MOBILE ASSEMBLY AND A REINFORCED FIXED STRUCTURE

(30) Priorité: 22.01.2019 FR 1900534
(43) Date de publication de la demande: 12.08.2020
(73) Titulaire: AIRBUS OPERATIONS (S.A.S.), 31060 Toulouse (FR)
(72) Inventeur: CALIMAN, Laurent, 31060 TOULOUSE Cedex 9 (FR); COUSIN, Antoine, 31060 TOULOUSE Cedex 9 (FR); GAILLARDO, Jérôme, 31060 TOULOUSE Cedex 9 (FR)
(74) Mandataire: Gicquel, Olivier Yves Gérard

(56) Documents cités:
- WO-A1-2015/019007
- ES-A1- 2 391 342
- FR-A1- 3 064 308
- US-A- 3 262 270
- US-A- 3 500 646
- US-A- 5 778 659
- US-A1- 2015 308 379
- US-A1- 2015 354 499
- US-A1- 2016 169 157
- US-A1- 2017 167 440
- US-A1- 2017 321 632

## Description

La présente invention concerne une nacelle d'un turboréacteur double flux qui comporte un ensemble mobile et une structure fixe renforcée, un turboréacteur double flux comportant un moteur et une telle nacelle, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur comporte également une soufflante qui est montée à l'avant du moteur et l'air entraîné par la soufflante se divise en un flux primaire qui traverse le moteur et un flux secondaire qui traverse une veine secondaire délimitée entre le moteur et la nacelle.

La nacelle comporte un carter de soufflante qui s'étend autour de la soufflante et qui est fixe.

La nacelle comporte également un ensemble mobile en translation qui porte des portes d'inversion d'un système d'inversion de poussée qui permet de dévier le flux secondaire vers l'extérieur de la nacelle et vers l'avant.

L'ensemble mobile est disposé à l'arrière du carter de soufflante et il est mobile entre une position avancée et une position reculée.

En position avancée, l'ensemble mobile est rapproché du carter de soufflante pour former une surface extérieure aérodynamique de la nacelle et une surface externe dans la paroi de la veine secondaire. En position reculée, l'ensemble mobile est éloigné du carter de soufflante pour libérer une ouverture entre le carter de soufflante et l'ensemble mobile, où ladite ouverture ouvre un passage entre la veine secondaire et l'extérieur.

L'ensemble mobile comporte un châssis monté coulissant sur une structure fixe de la nacelle et des capots extérieurs qui forment la surface extérieure de la nacelle et des parois intérieures qui forment la surface extérieure de la veine secondaire.

L'ensemble mobile comporte également des actionneurs, comme par exemple des vérins qui sont fixés entre le châssis de l'ensemble mobile et la structure fixe et qui sont commandés pour déplacer le châssis dans un sens ou dans l'autre.

Chaque porte d'inversion est mobile en rotation sur le châssis de l'ensemble mobile entre une position escamotée et une position déployée. En position escamotée, la porte d'inversion est en dehors de la veine secondaire et ne fait pas obstacle au flux secondaire, et en position déployée, la porte d'inversion est en travers de la veine secondaire et fait obstacle au flux secondaire pour le dévier vers l'ouverture.

Les efforts générés par les actionneurs sont relativement importants, et il est nécessaire de prévoir des structures lourdes pouvant supporter de tels efforts. Des architectures plus légères ont été développées et sont, par exemple, décrites dans les documents US2015/354499 et US3500646.

Un objet de la présente invention est de proposer une nacelle d'un turboréacteur double flux qui comporte un ensemble mobile et une structure fixe renforcée et plus légère, d'une conception alternative de celles décrites dans les deux documents susmentionnés.

A cet effet, est proposée une nacelle pour un turboréacteur double flux tel que revendiquée dans la revendication 1.

Une telle architecture intégrant des caissons de torsion sur lesquels sont fixés les actionneurs de l'ensemble mobile permet une reprise des efforts générés par lesdits actionneurs avec des lignes externes de la nacelle plus fines et présentant donc de meilleures performances aérodynamiques.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant une nacelle selon l'invention,
La figure 2 est une vue en coupe par un plan vertical de la nacelle en position avancée et en position escamotée de la porte d'inversion,
La figure 3 est une vue en coupe par un plan vertical de la nacelle en position reculée et en position déployée de la porte d'inversion,
La figure 4 est un agrandissement du détail IV de la figure 2,
La figure 5 est une vue de face de la nacelle,
La figure 6 est une vue en perspective d'un ensemble mobile de la nacelle selon l'invention, et
La figure 7 est une vue en perspective d'une structure fixe selon l'invention.

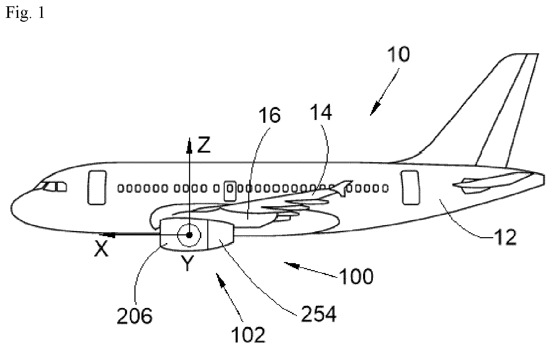

Dans la description qui suit, les termes relatifs à une position sont pris en référence à un aéronef en position d'avancement comme il est représenté sur la figure 1.

La figure 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

Dans la description qui suit, et par convention, on appelle X l'axe longitudinal du turboréacteur double flux 100 qui est parallèle à l'axe longitudinal de l'aéronef 10 et qui est orienté positivement dans le sens d'avancement de l'aéronef 10, on appelle Y l'axe transversal du turboréacteur double flux 100 qui est horizontal lorsque l'aéronef est au sol, et Z l'axe vertical lorsque l'aéronef est au sol, ces trois directions X, Y et Z étant orthogonales entre elles.

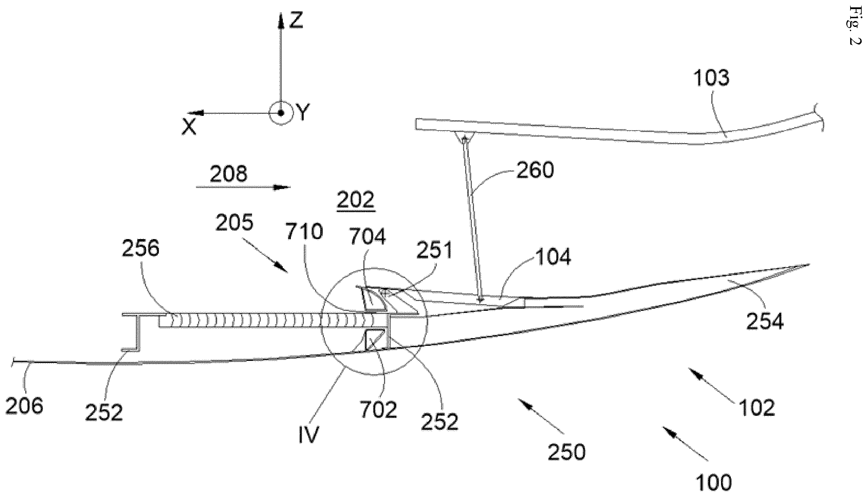

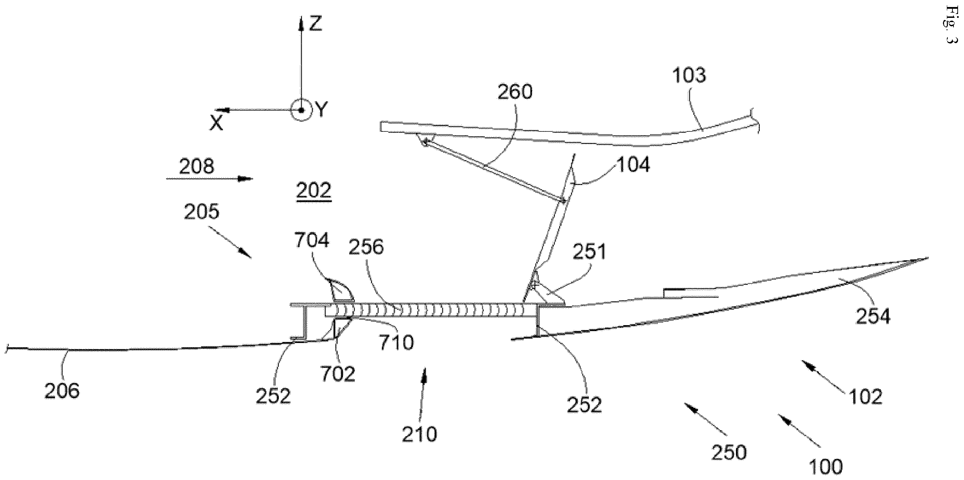

Les figures 2 et 3 montrent le turboréacteur double flux 100 qui comporte une nacelle 102 et un moteur qui est logé à l'intérieur de la nacelle 102. Le moteur est matérialisé ici par sa paroi extérieure 103. L'axe longitudinal X du turboréacteur double flux 100 est également l'axe longitudinal de la nacelle 102.

La nacelle 102 présente une structure fixe 205 qui comporte un capot fixe 206.

Une veine 202 dans laquelle circule un flux secondaire 208 est agencée dans la structure fixe 205, entre la structure fixe 205, et plus généralement la nacelle 102, et le moteur.

La nacelle 102 comporte un ensemble mobile 250 qui est mobile en translation parallèlement à une direction de déplacement globalement parallèle à l'axe longitudinal X par rapport à la structure fixe 205 et au capot fixe 206 entre une position avancée et une position reculée.

En position avancée (figure. 2), l'ensemble mobile 250 est rapproché du capot fixe 206 et en position reculée (figure 3), il est éloigné du capot fixe 206 vers l'arrière de manière à ouvrir une ouverture 210 entre la veine 202 et l'extérieur.

L'ensemble mobile 250 comporte un châssis 252 qui est monté mobile en translation par rapport à la structure fixe 205 et un capot mobile 254 fixé à l'arrière du châssis 252. En position avancée, le capot mobile 254 se positionne à l'arrière du capot fixe 206 et le prolonge pour former la surface extérieure aérodynamique de la nacelle 102. En position reculée, le capot mobile 254 est reculé par rapport au capot fixe 206 et l'ouverture 210 est ainsi délimitée à travers le cadre à l'avant par la structure fixe 205 et à l'arrière par le capot mobile 254.

Dans le mode de réalisation de l'invention présenté ici, l'ensemble mobile 250 comporte, en travers du cadre, des cascades 256 solidaires du châssis 252 et qui servent à dévier le flux traversant l'ouverture 210 vers l'avant. A cette fin, les cascades 256 présentent des ailettes de déviation. Les cascades 256 sont fixées en travers du cadre. En position avancée, les cascades 256 logent dans la structure fixe 205 et en position reculée, elles se positionnent en travers de l'ouverture 210.

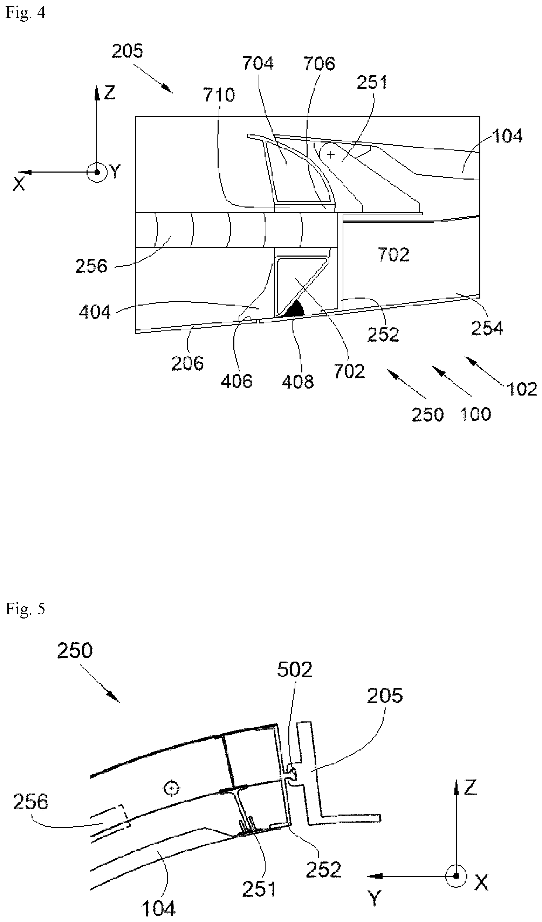

La figure 5 montre une vue de face de l'ensemble mobile 250.

Le guidage en translation du châssis 252 par rapport à la structure fixe 205 est assuré par tous moyens appropriés, comme par exemple des glissières 502 disposées à 12 heures et à 6 heures entre la structure fixe 205 et le châssis 252, etc. Sur la figure 5, seule la glissière 502 disposée à 12 heures est représentée, mais une glissière similaire peut être mise en place à 6 heures.

Dans le mode de réalisation de l'invention présenté ici, la nacelle 102 comporte au moins une porte d'inversion 104. En particulier, il peut y avoir deux portes d'inversion 104 disposées l'une en face de l'autre, ou plus de deux portes d'inversion 104 réparties régulièrement sur la périphérie de la nacelle 102. Chaque porte d'inversion 104 permet selon sa position d'inverser la poussée du turboréacteur double flux 100.

Dans la description qui suit, l'invention est plus particulièrement décrite pour une porte d'inversion 104, mais elle s'applique de la même manière pour chaque porte d'inversion 104 lorsqu'il y en a plusieurs.

La porte d'inversion 104 présente un bord arrière qui est monté libre en rotation sur l'ensemble mobile 250, et plus particulièrement sur le châssis 252, par l'intermédiaire d'une articulation 251. La porte d'inversion 104 est mobile entre une position escamotée et une position déployée pour laquelle l'inversion de poussée a une efficacité maximale. En position escamotée (figure 2), la porte d'inversion 104 se positionne en dehors de la veine 202, et plus particulièrement ici elle se plaque à l'intérieur du capot mobile 254 constituant ainsi une surface extérieure de la veine 202. En position déployée, la porte d'inversion 104 s'ouvre vers l'intérieur et la paroi extérieure 103 se positionne en travers de la veine 202 pour dévier au moins une partie du flux secondaire 208 vers l'extérieur à travers l'ouverture 210. L'extrémité libre de la porte d'inversion 104 se rapproche alors de la paroi extérieure 103.

Le déplacement de la porte d'inversion 104 de la position escamotée à la position déployée est assuré par un système d'entraînement 260 qui prend ici la forme d'une bielle qui est montée articulée entre la porte d'inversion 104 et la paroi extérieure 103. Ainsi, un déplacement de l'ensemble mobile 250 va entraîner un déplacement de la porte d'inversion 104 qui est retenue par la bielle 260 ce qui va entraîner un basculement de la porte d'inversion 104.

Le système d'entraînement 260 décrit ci-dessus peut prendre d'autres formes comme par exemple un moteur monté au niveau de l'axe de rotation de la porte d'inversion 104.

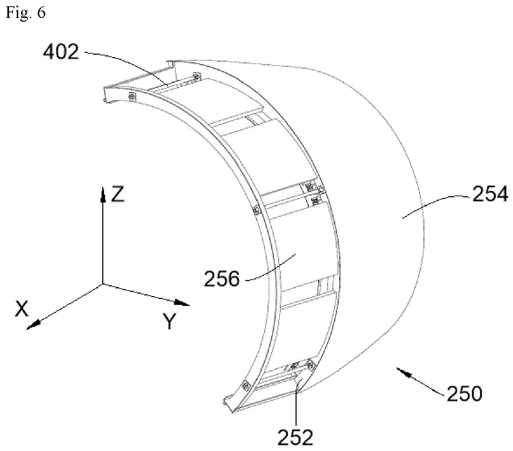

La figure 6 montre une vue en perspective d'une demi-partie de l'ensemble mobile 250. L'ensemble mobile 250 comporte au moins une tige filetée 402. Dans le mode de réalisation de l'invention présenté ici, il y a trois tiges filetées 402 et chacune est disposée entre deux cascades 256, mais le nombre peut varier en fonction de l'étendue angulaire de l'ensemble mobile 250, qui ici est constitué de deux demi-parties s'étendant chacune sur globalement 180° mais dont une seule est représentée et qui chacune comporte donc trois tiges filetées 402.

Chaque tige filetée 402 est parallèle à la direction de déplacement et est fixée au châssis 252 en travers du cadre. Ici, chaque extrémité de chaque tige filetée 402 est fixée au châssis 252.

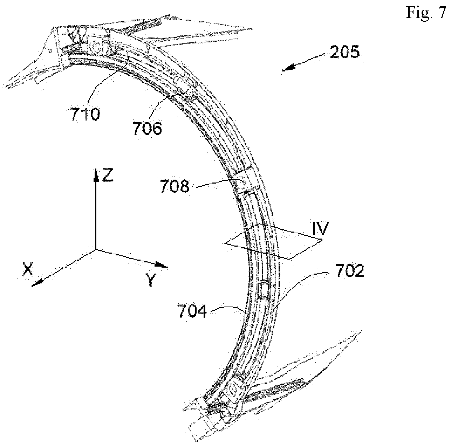

La figure 7 montre une vue en perspective d'une demi-partie de la structure fixe 205 qui ici, comme pour l'ensemble mobile, est constituée de deux demi-parties s'étendant chacune sur globalement 180° mais dont une seule est représentée. La figure 4 montre un agrandissement du détail IV qui correspond à une coupe par le plan IV de la figure 7.

La description qui suit s'appuie sur une demi-partie de la structure fixe 205, mais elle s'applique de la même manière à l'autre demi-partie.

La structure fixe 205 comporte un caisson extérieur 702, un caisson intérieur 704 et au moins un caisson intermédiaire 706.

Chaque caisson 702, 704, 706 est un caisson de torsion (« torque box » en langue anglo-saxonne), c'est-à-dire un caisson fermé et creux. Du fait de l'étendue angulaire des demi-parties de la structure fixe 205 et de l'ensemble mobile 250, le caisson extérieur 702 et le caisson intérieur 704 prennent la forme de deux demi-anneaux concentriques autour de l'axe longitudinal X.

Le caisson extérieur 702 prend la forme d'un caisson de révolution autour de l'axe longitudinal X et le caisson intérieur 704 prend la forme d'un caisson de révolution autour de l'axe longitudinal X et à l'intérieur du caisson extérieur 702. Le caisson extérieur 702 s'étend sur l'extérieur de la structure fixe 205.

Chaque caisson intermédiaire 706 s'étend globalement radialement par rapport à l'axe longitudinal X et il est fixé au caisson intérieur 704 et au caisson extérieur 702, par exemple par soudure ou boulonnage ou bien chaque caisson intermédiaire 706 peut faire partie intégrante d'une pièce composite intégrée constituée d'un caisson intérieur 704, d'un caisson extérieur 702 et de caissons intermédiaires 706.

Il y a ici six caissons intermédiaires 706 régulièrement répartis angulairement.

Une telle structure à base de caisson de torsion est particulièrement légère et rigide.

Pour chaque tige filetée 402, la structure fixe 205 comporte un écrou motorisé 708 fixé à au moins un caisson parmi le caisson extérieur 702, le caisson intérieur 704 ou un caisson intermédiaire 706 et avec lequel la tige filetée 402 engrène. Chaque écrou motorisé 708 est disposé ici en regard d'un caisson intermédiaire 706.

L'écrou motorisé 708 comporte un écrou à billes qui engrène avec la tige filetée 402 et un actionneur qui fait tourner l'écrou à billes et qui est fixé à au moins un caisson parmi le caisson extérieur 702, le caisson intérieur 704 ou un caisson intermédiaire 706. Dans le mode de réalisation de l'invention présenté ici, l'actionneur est fixé au caisson extérieur 702 et au caisson intermédiaire 706. Les efforts qui transitent par l'actionneur sont ainsi repris par les caissons 702, 704, 706 auquel il est fixé.

L'utilisation des caissons 702, 704 et 706 permet un renfort de la structure fixe 205 et d'y intégrer l'actionneur et ainsi permet de diminuer l'épaisseur du capot mobile 254 et d'avoir ainsi des lignes externes de la nacelle 102 plus fines et présentant donc de meilleures performances aérodynamiques.

La structure fixe 205 présente entre le caisson extérieur 702 et le caisson intérieur 704, une fente 710 dans laquelle une cascade 256 est disposée. Cette fente 710 permet le déplacement de la cascade 256 entre la position avancée et la position reculée, et inversement. Ainsi pour chaque cascade 256, la structure fixe 205 présente une fente 710 dans laquelle ladite cascade 256 est disposée, et chaque fente 710 est délimitée entre le caisson extérieur 702 et le caisson intérieur 704.

Dans le mode de réalisation de l'invention présenté ici, chaque fente 710 est angulairement délimitée par deux caissons intermédiaires 706 successifs.

Comme le montre la figure 4, le caisson extérieur 702 porte un élément d'appui 404 qui présente une face extérieure d'appui 406 orientée vers l'extérieur et contre laquelle s'appuie le capot fixe 206. La face extérieure d'appui 406 se positionne à l'intérieur du capot fixe 206.

Lors du fonctionnement du turboréacteur 100, le capot fixe 206 subit des déformations qui le déplacent par rapport à la face extérieure d'appui 406. Pour limiter les frottements lors de ces déplacements, une bande de Téflon ® est fixée entre eux, c'est-à-dire sur la face extérieure d'appui 406 ou à l'intérieur du capot fixe 206.

Pour améliorer l'étanchéité entre le capot mobile 254 et le caisson extérieur 702, celui-ci porte un joint 408 qui se positionne entre le capot mobile 254 et le caisson extérieur 702 en position avancée.

## Revendications

1. Nacelle (102) pour un turboréacteur double flux (100), ladite nacelle (102) ayant un axe longitudinal et comportant :
- une structure fixe (205) comportant un capot fixe (206) et dans laquelle est agencée une veine (202) dans laquelle circule un flux secondaire (208),
- un ensemble mobile (250) comportant un châssis (252) formant un cadre et un capot mobile (254) fixé à l'arrière du châssis (252), où le châssis (252) est mobile par rapport à la structure fixe (205) en translation parallèlement à une direction de déplacement entre une position avancée dans laquelle le capot mobile (254) se positionne à l'arrière du capot fixe (206) et le prolonge, et une position reculée dans laquelle le capot mobile (254) est reculé par rapport au capot fixe (206) de manière à ouvrir une ouverture (210) à travers le cadre entre la veine (202) et l'extérieur,
où l'ensemble mobile (250) comporte au moins une tige filetée (402), chacune étant parallèle à la direction de déplacement et fixée au châssis (252) en travers du cadre,
où pour chaque tige filetée (402), la structure fixe (205) comporte un écrou motorisé (708) comportant un écrou à billes qui engrène avec la tige filetée (402), et un actionneur qui fait tourner l'écrou à billes
**caractérisé en ce que** la structure fixe (205) comporte un caisson extérieur (702), un caisson intérieur (704) et au moins un caisson intermédiaire (706), où le caisson extérieur (702) prend la forme d'un caisson de révolution autour de l'axe longitudinal, où le caisson intérieur (704) prend la forme d'un caisson de révolution autour de l'axe longitudinal et à l'intérieur du caisson extérieur (702), et où chaque caisson intermédiaire (706) s'étend globalement radialement par rapport à l'axe longitudinal et est fixé au caisson intérieur (704) et au caisson extérieur (702), et **en ce que** l'actionneur est fixé à au moins un caisson parmi le caisson extérieur (702), le caisson intérieur (704) ou un caisson intermédiaire (706).

2. Nacelle (102) selon la revendication 1, **caractérisée en ce qu'**elle comporte des cascades (256) solidaires du châssis (252) de l'ensemble mobile (250) et fixées en travers du cadre, **en ce que**, pour chaque cascade (256), la structure fixe (205) présente une fente (710) dans laquelle ladite cascade (256) est disposée, et **en ce que** chaque fente (710) est délimitée entre le caisson extérieur (702) et le caisson intérieur (704).

3. Nacelle (102) selon la revendication 2, **caractérisée en ce que** chaque fente (710) est angulairement délimitée par deux caissons intermédiaires (706) successifs.

4. Nacelle (102) selon l'une des revendications précédentes, **caractérisée en ce que** le caisson extérieur (702) porte un élément d'appui (404) qui présente une face extérieure d'appui (406) orientée vers l'extérieur et contre laquelle s'appuie le capot fixe (206).

5. Nacelle (102) selon la revendication 4, **caractérisée en ce qu'**une bande de téflon ® est fixée soit sur la face extérieure d'appui (406), soit à l'intérieur du capot fixe (206).

6. Nacelle (102) selon l'une des revendications précédentes, **caractérisée en ce que** le caisson extérieur (702) porte un joint (408) qui se positionne entre le capot mobile (254) et le caisson extérieur (702) en position avancée.

7. Turboréacteur double flux (100) comportant un moteur et une nacelle (102) selon l'une des revendications précédentes, où la veine (202) est délimitée entre le moteur et la nacelle (102).

8. Aéronef (10) comportant un turboréacteur double flux (100) selon la revendication précédente.

## Patentansprüche

1. Gondel (102) für ein Zweistrom-Turbinenstrahltriebwerk (100), wobei die Gondel (102) eine Längsachse aufweist und Folgendes umfasst:
- eine feste Struktur (205), die eine feste Abdeckung (206) umfasst und in der eine Bahn (202) angeordnet ist, in der ein Sekundärstrom (208) zirkuliert,
- eine bewegliche Anordnung (250), die einen Rahmen (252), der ein Gerüst ausbildet, und eine bewegliche Abdeckung (254), die hinten am Rahmen (252) befestigt ist, umfasst, wobei der Rahmen (252) in Bezug auf die feste Struktur (205) parallel zu einer Bewegungsrichtung zwischen einer vorgeschobenen Position, in der die bewegliche Abdeckung (254) hinten an der festen Abdeckung (206) positioniert ist und diese verlängert, und einer zurückgezogenen Position, in der die bewegliche Abdeckung (254) in Bezug auf die feste Abdeckung (206) zurückgezogen ist, um eine Öffnung (210) durch den Rahmen zwischen der Bahn (202) und dem Äußeren zu öffnen, translatorisch bewegbar ist,
wobei die bewegliche Anordnung (250) zumindest eine Gewindestange (402) aufweist, die jeweils parallel zur Bewegungsrichtung verläuft und quer zum Gestell am Rahmen (252) befestigt ist,
wobei die feste Struktur (205) für jede Gewindestange (402) eine motorisierte Mutter (708) mit einer Kugelmutter, die in die Gewindestange (402) eingreift, und einen Aktuator, der die Kugelmutter dreht, aufweist,
**dadurch gekennzeichnet, dass** die feste Struktur (205) einen äußeren Kasten (702), einen inneren Kasten (704) und zumindest einen Zwischenkasten (706) aufweist, wobei der äußere Kasten (702) die Form eines Drehkastens um die Längsachse aufweist, wobei der innere Kasten (704) die Form eines Drehkastens um die Längsachse und innerhalb des äußeren Kastens (702) aufweist und wobei sich jeder Zwischenkasten (706) im Allgemeinen radial in Bezug auf die Längsachse erstreckt und am inneren Kasten (704) und am äußeren Kasten (702) befestigt ist, und dass der Aktuator zumindest am äußeren Kasten (702), am inneren Kasten (704) und/oder an einem Zwischenkasten (706) befestigt ist.

2. Gondel (102) nach Anspruch 1, **dadurch gekennzeichnet, dass** sie Kaskaden (256) umfasst, die fest mit dem Rahmen (252) der beweglichen Anordnung (250) verbunden und quer zum Rahmen befestigt sind, dass die feste Struktur (205) für jede Kaskade (256) einen Schlitz (710) aufweist, in dem die Kaskade (256) angeordnet ist, und dass jeder Schlitz (710) zwischen dem äußeren Kasten (702) und dem inneren Kasten (704) begrenzt ist.

3. Gondel (102) nach Anspruch 2, **dadurch gekennzeichnet, dass** jeder Schlitz (710) durch zwei aufeinanderfolgende Zwischenkästen (706) winkelmäßig begrenzt ist.

4. Gondel (102) nach einem der vorangehenden Ansprüche, **dadurch gekennzeichnet, dass** der äußere Kasten (702) ein Stützelement (404) trägt, das eine äußere Stützfläche (406) aufweist, die nach außen gerichtet ist und an der die feste Abdeckung (206) anliegt.

5. Gondel (102) nach Anspruch 4, **dadurch gekennzeichnet, dass** entweder an der äußeren Stützfläche (406) oder im Inneren der festen Abdeckung (206) ein Teflon®-Band befestigt ist.

6. Gondel (102) nach einem der vorangehenden Ansprüche, **dadurch gekennzeichnet, dass** der äußere Kasten (702) eine Dichtung (408) trägt, die in der vorgeschobenen Position zwischen der beweglichen Abdeckung (254) und dem äußeren Kasten (702) positioniert ist.

7. Zweistrom-Turbinenstrahltriebwerk (100), umfassend einen Antrieb und eine Gondel (102) nach einem der vorangehenden Ansprüche, wobei die Bahn (202) zwischen dem Antrieb und der Gondel (102) begrenzt ist.

8. Luftfahrzeug (10), umfassend ein Zweistrom-Turbinenstrahltriebwerk (100) nach dem vorangehenden Anspruch.

## Claims

1. Nacelle (102) for a turbofan (100), said nacelle (102) having a longitudinal axis and comprising:
- a fixed structure (205) comprising a fixed cowl (206) and in which there is arranged a duct (202) in which there flows a secondary flow (208),
- a mobile assembly (250) comprising a chassis (252) forming a frame and a mobile cowl (254) fixed to the rear of the chassis (252), the chassis (252) being mobile, relative to the fixed structure (205), in translation parallel to a direction of displacement between an advanced position, in which the mobile cowl (254) is positioned to the rear of the fixed cowl (206) and extends it, and a retracted position, in which the mobile cowl (254) is retracted relative to the fixed cowl (206) so as to open an opening (210) through the frame between the duct (202) and the outside,
where the mobile assembly (250) comprises at least one threaded rod (402), each one being parallel to the direction of displacement and fixed to the chassis (252) through the frame,
where, for each threaded rod (402), the fixed structure (205) comprises a motorized nut (708) comprising a ball nut which meshes with the threaded rod (402), and an actuator which turns the ball nut
**characterized in that** the fixed structure (205) comprises an outer box (702), an inner box (704) and at least one intermediate box (706), where the outer box (702) takes the form of a box of revolution about the longitudinal axis, where the inner box (704) takes the form of a box of revolution about the longitudinal axis and inside the outer box (702), and where each intermediate box (706) extends generally radially relative to the longitudinal axis and is fixed to the inner box (704) and to the outer box (702), and **in that** the actuator is fixed to at least one box from among the outer box (702), the inner box (704) or an intermediate box (706).

2. Nacelle (102) according to Claim 1, **characterized in that** it comprises gratings (256) that are secured to the chassis (252) of the mobile assembly (250) and are fixed across the frame, **in that**, for each grating (256), the fixed structure (205) has a slot (710) in which said grating (256) is arranged, and **in that** each slot (710) is delimited between the outer box (702) and the inner box (704).

3. Nacelle (102) according to Claim 2, **characterized in that** each slot (710) is delimited angularly by two successive intermediate boxes (706).

4. Nacelle (102) according to one of the preceding claims, **characterized in that** the outer box (702) bears a bearing element (404) that has an outer bearing face (406) which is oriented towards the outside and against which the fixed cowl (206) bears.

5. Nacelle (102) according to Claim 4, **characterized in that** a strip of Teflon ® is fixed either to the outer bearing face (406), or to the inside of the fixed cowl (206) .

6. Nacelle (102) according to one of the preceding claims, **characterized in that** the outer box (702) bears a seal (408) which, in the advanced position, is positioned between the mobile cowl (254) and the outer box (702).

7. Turbofan (100) including a motor and a nacelle (102) according to one of the preceding claims, where the duct (202) is delimited between the motor and the nacelle (102) .

8. Aircraft (10) comprising a turbofan (100) according to the preceding claim.
